# NEW EUROPEAN PATENT SPECIFICATION

(11) **EP 0 139 328 B2**
(45) Date of publication and mention of the opposition decision: **04.01.1995**
(45) Mention of the grant of the patent: 16.05.1990
(21) Application number: 84201437.5
(22) Date of filing: 05.10.1984
(51) Int. Cl.: A01K 7/06

(54) **A cattle drinking trough**
Trogtränke für Vieh
Auge-abreuvoir pour bétail

(30) Priority: 07.10.1983 NL 8303460
(43) Date of publication of application: 02.05.1985
(73) Proprietor: L.S. Brouwers Stalinrichtingen B.V., NL-8912 AC Leeuwarden (NL)
(72) Inventor: Rauwerda, Reimer, NL-8914 AE Leeuwarden (NL)
(74) Representative: Prins, Adrianus Willem

(56) References cited:
- DE-A- 2 900 161
- DE-U- 7 210 579
- FR-A- 2 443 803
- GB-A- 1 248 622
- US-A- 3 262 424
- Price list of L.S. Brouwers Stalinrichtingen B.V. dated 4/7/83
- Brochure "BALKO" and price list No.11 "Sirocco"

## Description

The invention relates to an animal drinking device, in particular suitable for pigs, comprising an upright back plate; a drinking bowl with an overflow edge defining a maximum water level; water metering means positioned near the back plate above the bowl and having a valve and a pressure member extending downwardly so that the lower end is at a level flush with or lower than the maximum water level in the bowl, wherein the bowl has a lowest area which is positioned substantially closer to the back plate than to the overflow edge; a substantially tubular housing extending obliquely upward from the back plate, wherein the tubular housing at its lower portion together with the lower portion of the back plate forms the bowl, and wherein the tubular housing in order to form a head insertion opening is cut off along a plane which intersects the plane of the back plate at a sharp angle along a line above the back plate proper.

Such an animal drinking device has been disclosed in a price list of L.S. Brouwers Stalinrichtingen B.V., dated 4th July 1983

It is an object of the present invention to provide an improved animal drinking device, particularly suitable for pigs, having improved properties regarding prevention of water wastage and in general improving hygiene and allowing simple maintenance.

According to the invention an animal drinking device as described above is characterized in that the valve is a nipple valve which is substantially vertical; and in that the pressure member extends from the underside of the casing of the valve, wherein the lower end of the pressure member is located substantially higher than the lower end of the back plate.

Since the drinking device according to the invention in fact is modelled on the anatomy of the drinking animal's head, e.g. that of a sow, the animal is guided by the walls of the housing to move its head towards the bottom of the trough during its insertion therein, owing to the relatively slight play around its head, the deepest point of which is as far away from the head insertion opening as possible. The animal first drinks of the available quantity of lure water and then proceeds to press against the pressure member of the water metering means so as to again supply water to the trough. When the drinking device is used properly, which as has appeared in practice can be rapidly learned by the animal, a reciprocating movement takes place during the drinking so that the animal successively drinks of the water supply from the trough, moving its head towards the pressure member for a fresh water supply, thereby pressing against it, subsequently moves its head again towards the water supply in the trough to drink again, etc. Since the slight quantity of lure water is repeatedly replaced by clean water, the formation of bacteria in the trough is prevented.

There is no obstacle on the insertion line from the head insertion opening towards the opposite wall and the lure water supply in the bowl of the trough can be provided as far away from the insertion opening as possible in the direction of the opposite wall. As a result of the greater distance from the lure water supply to the head insertion opening, in combination with the relatively slight free space in the trough around the head on account of the anatomical shape of the snout, spillage of water during drinking has proved to be appreciably less than is the case in the prior drinking device.

The reciprocating movement made by the animal's head while drinking from the water supply in the trough towards the pressure member and back is made possible by choosing the distance from the (lure) water level towards the pressure member operating the water supply sufficiently larger than the thickness of the animal's snout. It is thus avoided that also during drinking pressure is exerted against the pressure member, thereby increasing the chance of water being wasted. On the other hand, the location of the lower end of the pressure member should be at a level flush with or lower than the maximum water level, that is near the level of the overflow edge of the trough, thus preventing the animal from pressing its snout continuously against the pressure member, resulting in overflow of the trough. When the distance from the lure water level towards the pressure member is effectively chosen, the water rising in the trough, in case of prolonged pressure exerted by the animal against the pressure member, due e.g. to playfulness, will flow into the animal's nostrils, partly due to the anatomical form, so that it is forced to release the pressure member again.

One embodiment of the drinking device according to the invention will now be described, by way of example, with reference to the accompanying drawing, in which:
Fig. 1 is a perspective front view of a drinking device; and
Fig. 2 is a longitudinal cross-section of the device of Fig. 1.

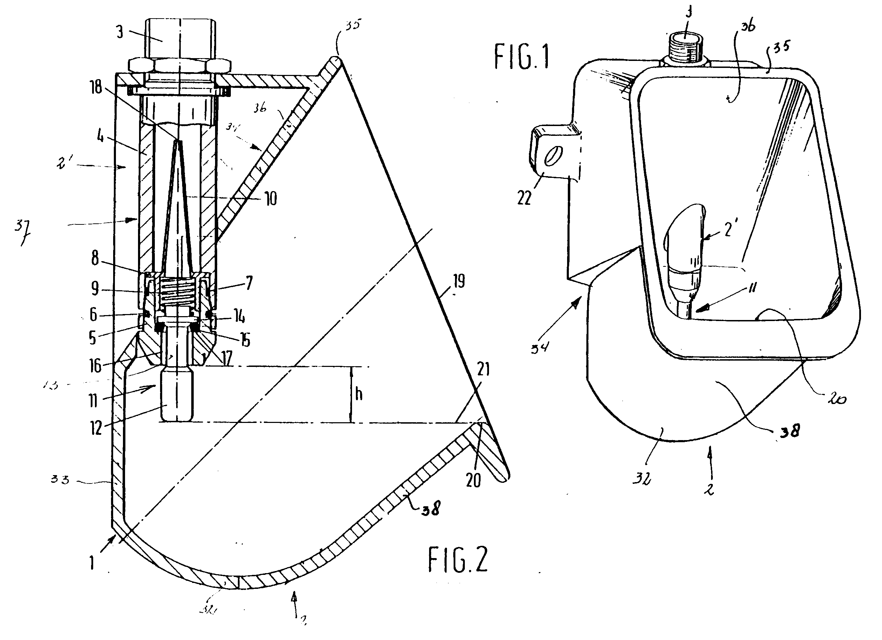

The animal drinking device 1 shown in the drawing is composed of the trough 2 fitted with attachment lugs 22 (Fig. 1) and the water metering means 2'. The trough is made of cast iron and internally enameled, having a height of 21 cm and a depth of 16 cm. At 19 is shown the head insertion opening and at 20 the overflow edge of the trough. The trough can be connected through the coupling 3 to the water supply pipe connected to a water source.

The drinking device as shown has a back plate 33 which in use will be in an upright position. From the back plate a substantially tubular housing extends obliquely upward. The lower part of the tubular housing together with the lower part of the back plate 33 forms a bowl 32 which in use will hold the water. The tubular housing has side wall sections 34 and upper and lower wall sections 36 and 38 respectively, together forming an all-sidedly closed tube. The tube has been cut off to obtain the head insertion opening 19 at some distance from the back plate. The plane of the head insertion opening 19 intersects the plane of the back plate at some distance above the back plate proper. The angle between the center-line of the tubular housing and said plane intersecting the plane of the back plate, which angle faces the plane of the back plate, may be larger than 90° as shown in Fig. 1.

The water metering means 2' comprise the valve casing 37 divided into casing portions 4 and 5, within which the other members associated with the water metering means are confined, while the assembly is retained in place in mounted condition via the retaining clip 6, keeping the casing portions 4 and 5 fixed relatively to one another.

The members associated with the water metering means 2', and disposed within the valve casing comprise the nipple valve 11 with the end portion functioning as actuating member 12 and extending into the trough 2 and the constricted portion 13 with which the nipple valve is conducted through the larger diameter opening 16 in the valve casing and which is furthermore fitted with the sealing collar 14. Under the influence of the tension of the spring 9 produced via the collar 8 of the dirt catcher 10, the sealing collar 14 is pressed onto the seat edge 17 through the intermediary of the rubber O-ring 5, thus blocking the water supply to the trough.

At 10 is shown a dirt catcher having the form of a truncated hollow cone. The size of the water passage 18 is defined by the height of the cone and may e.g. be enlarged by shortening the cone. At a given pressure of the water, the water supply can be adjusted by means of the size of the water passage, or the connection of the water metering means to a water source or can be adjusted under high or low pressure while the water passage and hence the water supply can be enlarged by shortening the dirt catcher.

By pressing its snout axially on the under-side against the pressure member 12, thereby lifting the nipple valve 11 with the sealing collar 14 and the O-ring 15 against spring tension, or by laterally pressing against the pressure member 12, and by tilting the nipple valve with the sealing collar 14 and the O-ring 15 off the seat 17, the drinking animal can cause water to flow via the opening 16 into the trough 2. The nipple valve 11 is effectively made of brass or of another corrosion-resistant material, such as a synthetic plastics material.

The highest water level in the trough is indicated at 21. In accordance with KIWA regulations, the height *h* between the highest attainable water level 21 and the under-side of the valve casing is at least 20 cm.

The drawing clearly shows that the interior of the trough is easily accessible and hence easy to clean. There are no dead corners which can be attained with difficulty, where dirt, e.g. manure, may accumulate.

The maintenance of the water metering means can be effected in a simple manner: only the retaining clip 6 need be removed so that the valve casing portions 4 and 5 can be separated and the parts confined within the valve casing can be removed without the use of tools.

## Claims

1. An animal drinking device, in particular suitable for pigs, comprising an upright back plate (33); a drinking bowl (32) with an overflow edge defining a maximum water level (21); water metering means (2') positioned near the back plate (33) above the bowl (32) and having a valve (11) and a pressure member (12) extending downwardly so that the lower end is at a level flush with or lower than the maximum water level (21) in the bowl (32), wherein the bowl (32) has a lowest area which is positioned substantially closer to the back plate (33) than to the overflow edge (20); a substantially tubular housing (34,36,38) extending obliquely upward from the back plate, wherein the tubular housing at its lower portion (38) together with the lower portion of the back plate (33) forms the bowl (32), and wherein the tubular housing in order to form a head insertion opening (19) is cut off along a plane which intersects the plane of the back plate at a sharp angle along a line above the back plate proper, characterized in that the valve is a nipple valve which is substantially vertical; and in that the pressure member extends from the underside of the casing of the valve (11), wherein the lower end of the pressure member (12) is located substantially higher than the lower end of the back plate (33).

2. An animal drinking device according to claim 1, characterized in that the tubular housing (34, 36, 38) has a substantially quadrangular cross-section.

3. An animal drinking device acording to claim 1 or 2, characterized in that the tubular housing has a tapered shape widening from the back plate (33) to the head insertion opening (19).

4. An animal drinking device according to any one of claims 1-3, characterized in that said plane intersecting the plane of the back plate (33) encloses with the center line of the tubular housing an angle facing the plane of the back plate, which angle is larger than 90°.

## Patentansprüche

1. Tränkevorrichtung für Tiere, insbesondere geeignet für Schweine, umfassend eine aufrechte Rückplatte (33); eine Tränkeschale (32) mit einer einen maximalen Wasserspiegel (21) definierenden Überlaufkante; Wasserdosiermittel (2'), die nahe der Rückplatte (33) über der Schale (32) positioniert sind und ein Ventil (11) und ein Druckteil (12), das sich abwärts erstreckt, so daß das untere Ende auf einem Niveau ist, das mit dem maximalen Wasserspiegel (21) in der Schale (32) bündig oder niedriger als dieser ist, hat, wobei die Schale (32) einen untersten Bereich hat, der wesentlich näher an der Rückplatte (33) als an der Überlaufkante (20) positioniert ist; ein im wesentlichen rohrförmiges Gehäuse (34, 36, 38), das sich schräg aufwärts von der Rückplatte erstreckt, wobei das rohrförmige Gehäuse in seinem unteren Teil (38) zusammen mit dem unteren Teil der Rückplatte (33) die Schale (32) bildet, und wobei das rohrförmige Gehäuse zur Bildung einer Kopfeinstecköffnung (19) längs einer Ebene abgeschnitten ist, welche die Ebene der Rückplatte unter einem spitzen Winkel längs einer Linie über der eigentlichen Rückplatte schneidet, dadurch **gekennzeichnet,** daß das Ventil ein Nippelventil ist, welches im wesentlichen vertikal ist; und daß sich das Druckteil von der Unterseite des Gehäuses des Ventils (11) aus erstreckt, wobei das untere Ende des Druckteils (12) wesentlich höher als das untere Ende der Rückplatte (33) liegt.

2. Tränkevorrichtung für Tiere nach Anspruch 1, dadurch **gekennzeichnet,** daß das rohrförmige Gehäuse (34, 26, 38) einen im wesentlichen viereckigen Querschnitt aufweist.

3. Tränkevorrichtung für Tiere nach Anspruch 1 oder 2, dadurch **gekennzeichnet,** daß das rohrförmige Gehäuse eine konische Form aufweist, die sich von der Rückplatte (33) zur Kopfeinstecköffnung (19) erweitert.

4. Tränkevorrichtung für Tiere nach einem der Ansprüche 1 bis 3, dadurch **gekennzeichnet,** daß die die Ebene der Rückplatte (33) schneidende Ebene mit der Mittellinie des rohrförmigen Gehäuses einen Winkel gegenüber der Ebene der Rückplatte einschließt, welcher Winkel größer als 90° ist.

## Revendications

1. Dispositif d'abreuvage d'animaux, convenant en particulier aux porcs, comportant une paroi arrière verticale (33); une coquille d'abreuvage (32) ayant un bord-déversoir définissant un niveau d'eau maximal (21); un doseur d'eau (2') placé près de la paroi arrière (33) au-dessus de la coquille (32) et possédant une vanne (11) et un organe de pression (12) s'étendant vers le bas, de sorte que l'extrémité inférieure se trouve à la même hauteur ou plus bas que le niveau d'eau maximal (21) dans la coquille (32), dans lequel la zone la plus basse de la coquille (32) est située nettement plus près de la paroi arrière (33) que du bord-déversoir (20); un corps sensiblement tubulaire (34, 36, 38) s'étendant obliquement vers le haut à partir de la paroi arrière, dans lequel le corps tubulaire à sa partie inférieure (38) forme avec la partie inférieure de la paroi arrière (33) la coquille (32), et dans lequel le corps tubulaire, en vue de la formation d'une ouverture (19) d'introduction de la tête de l'animal, est coupé suivant un plan qui coupe le plan de la paroi arrière à angle aigu suivant une ligne située au-dessus de cette paroi, caractérisé en ce que la vanne est une vanne à mamelon qui est sensiblement verticale et en ce que l'organe de pression s'étend à partir du côté inférieur de la gaine de la vanne (11), l'extrémité inférieure de l'organe de pression (12) étant située sensiblement plus haut que l'extrémité inférieure de la paroi arrière (33).

2. Dispositif d'abreuvage d'animaux selon la revendication 1, caractérisé en ce que le corps tubulaire (34, 36, 38) a une section transversale sensiblement quadrangulaire.

3. Dispositif d'abreuvage d'animaux selon la revendication 1 ou 2, caractérisé en ce que le corps tubulaire a une forme conique s'élargissant de la paroi arrière (33) à l'ouverture (19) d'introduction de la tête.

4. Dispositif d'abreuvage d'animaux selon l'une quelconque des revendications 1 à 3, caractérisé en ce que ledit plan coupant le plan de la paroi arrière (33) forme avec l'axe du corps tubulaire un angle faisant face au plan de la paroi arrière, lequel angle est supérieur à 90°.
